# EUROPÄISCHE PATENTSCHRIFT

(11) **EP 0 799 810 B1**
(45) Veröffentlichungstag und Bekanntmachung des Hinweises auf die Patenterteilung: **05.12.2001**
(21) Anmeldenummer: 97105115.6
(22) Anmeldetag: 26.03.1997
(51) Int. Cl.: C04B 38/02, B22F 3/11, B01J 37/00

(54) **Offenzellige Sinterschäume und kontinuierliches Verfahren zu ihrer Herstellung**
Sintered foams with open porosity and continuous process for their preparation
Mousses frittées avec porosité ouverte et procédé continu pour leur préparation

(30) Priorität: 01.04.1996 DE 19612985; 23.08.1996 DE 19634205
(43) Veröffentlichungstag der Anmeldung: 08.10.1997
(73) Patentinhaber: BASF AKTIENGESELLSCHAFT, 67056 Ludwigshafen (DE)
(72) Erfinder: Sterzel, Hans-Josef, Dr., 67125 Dannstadt-Schauernheim (DE); Hesse, Michael, Dr., 67549 Worms (DE); Kleinke, Andreas, Dr., 67063 Ludwigshafen (DE)
(74) Vertreter: Isenbruck, Günter, Dr.

(56) Entgegenhaltungen:
- DE-A- 3 816 893
- DE-C- 801 142
- DE-C- 846 525
- DE-C- 904 272
- US-A- 4 318 996
- US-A- 4 863 712
- CHEMICAL ABSTRACTS, vol. 115, no. 18, 4.November 1991 Columbus, Ohio, US; abstract no. 188456a, XP000256283 & JP 03 131 580 A (ASAHI OPTICAL CO LTD) 5.Juni 1991

## Beschreibung

Die Erfindung betrifft Verfahren zur Herstellung sowohl keramischer als auch metallischer offenzelliger Schäume für vielfältige Anwendungen, insbesondere kontinuierliche Verfahren zu ihrer Herstellung.

Anorganische Schäume an sich sind bereits bekannt. Sie werden nach vielfältigen Verfahren mit bisher unüberwindlichen Nachteilen und deshalb derart hohen Kosten hergestellt, daß sie nur in Sonderfällen genutzt werden. Das weitaus am meisten beanspruchte Verfahren besteht darin, daß offenzellige Polymerschäume mit einem Schlickermaterial infiltriert werden, das anorganische Partikel enthält. Der infiltrierte Polymerschaum, meist ein Polyurethanschaum, wird vorsichtig getrocknet und durch langsames kontrolliertes Erhitzen die organischen Bestandteile entfernt und das aus anorganischem Pulver bestehende Negativ gesintert. Darin liegt bereits der Grund für die aufwendige, kostspielige Herstellung. Sowohl die Trocknung des mit Schlikermaterial ausgefüllten Porengefüges sowie das Wegpyrolysieren der organischen Bestandteile ist sehr zeitaufwendig. Zusätzlich sind die Materialdicken aufgrund der langsamen Trocknung und Pyrolyse auf wenige Zentimeter begrenzt. Die Herstellung derartiger Schäume wird beispielsweise in der DE-A 39 34 496 oder der EP-A 157 974 beschrieben. Die EP-A 440 322 beschreibt die aufwendige Technologie, offenzellige keramische Schäume über eine Anordnung von Walzen zum Infiltrieren und Komprimieren der infiltrierten Polymerschäume herzustellen.

Für anorganische Schäume wurden vielfältige Anwendungen wegen ihrer Hochtemperaturbeständigkeit und Medienbeständigkeit beschrieben. So beschreiben die DE-A 37 32 654, die US-A 5 336 656, die US-A 5 *256* 387, die US-A 5 242 882 oder die US-A 5 217 939 keramische Schäume als Träger für Katalysatoren, z.B. für die Rauchgasbehandlung. Mit ihrer statistischen Anordnung der Stege ergeben keramische Schäume bei sehr vorteilhaft niedrigem Druckverlust einen wesentlich besseren Stoffaustausch als extrudierte Wabenkörper, die in Strömungsrichtung aufgrund der Extrusionstechnologie keine Stege aufweisen können. Dies gilt insbesondere dann, wenn das Porenvolumen mehr als 50%, günstiger mehr als 70%, des Gesamtvolumens des Katalysatorträgers ausmacht und die Stege Dicken von weniger als 1 mm aufweisen. Geringe Druckverluste sind besonders in der Anwendung als Träger in der Rauchgasreinigung wichtig (DE-A 35 10 170), beim Fahrzeug-Abgaskatalysator (DE-A 37 31 888) oder in der Anwendung als Diesel-Abgasfilter (EP-A 312 501). Oft werden keramische Schäume auch als Filter zur Reinigung sehr heißer Schmelzen wie Metallschmelzen (US-A 4 697 632) oder zur Filtration heißer Gase beschrieben (EP-A 412 931).

Alle diese Anwendungen bedienen sich der Herstellung offenzelliger Schäume durch das Infiltrieren offenzelliger Polymerschäume. So vielfältig wie die Anwendungen sind auch die beanspruchten anorganischen Materialien. Für Schäume mit niedriger thermischer Ausdehnung werden als Materialien Lithiumaluminiumsilikat oder Cordierit beansprucht. Derartige Schäume weisen eine besonders hohe Beständigkeit gegen krasse Temperaturwechsel auf, wie sie ein Kfz-Abgaskatalysator besitzen muß (JP-A 6 1295 283). Für Schmelzefilter von Metallen dagegen ist das inerte Verhalten gegenüber den Metallschmelzen wichtig. Hier werden α-Aluminiumoxid, Siliciumcarbid sowie SiO₂ oder insbesondere Mischungen davon eingesetzt (EP-A 412 673). Besonders für die Filtration von Eisenschmelzen oder Schmelzen eisenhaltiger Legierungen sind Schäume aus Siliciumcarbid geeignet (WO 88/07403). Auch Siliciumnitrid wird als Filtermaterial keramischer offenzelliger Schäume beansprucht (DE-A 38 35 807). Die EP-A 445 067 beschreibt als Filter für geschmolzene Metalle mit Y₂O₃ stabilisiertes Zirkonoxid bzw. ZrO₂/Al₂O₃-Mischkeramiken.

Neben der Infiltration von Polymerschäumen mit anorganischen Schlickermaterialien, gefolgt von Trocknen, Ausbrennen und Sintern, sind auch noch andere Methoden bekannt geworden, anorganische Schäume herzustellen:

Die WO 95/11752 beschreibt ein Verfahren, nach dem Metalle chemisch auf einem offenzelligen Polymerschaum abgeschieden werden und nach Trocknen und Pyrolysieren ein offenzelliger Metallschaum erhalten wird, der durch Oxidation in einen keramischen Schaum überführt werden kann. Auch hierbei sind Trocknen und Pyrolysieren sehr aufwendig. Trocknung und Pyrolyse werden vermieden nach dem in der EP-A 261 070 beanspruchten Verfahren, das zur Herstellung keramischer Schäume von einem Metallschaum, vorzugsweise einem Aluminiumschaum, ausgeht und bei dem dieser dann zum Metalloxid oxidiert wird. Ein Nachteil dieser Verfahren ist, daß auf irgendeine Weise vorher ein Metallschaum herzustellen ist. Ein Verfahren zur Herstellung von Metallschäumen (Fraunhofer-Institut für Angewandte Materialforschung, Bremen) geht von Aluminiumpulver aus, dem Titanhydrid-Pulver zugemischt wird. Die Pulvermischung wird in einer Form bis knapp über den Al-Schmelzpunkt erhitzt, wobei sich das Titanhydrid zersetzt und der entstehende Wasserstoff das geschmolzene Aluminium aufschäumt. In diesem nicht verallgemeinerbaren Fall passen die Schmelztemperatur des Aluminiums und der Zersetzungstemperaturbereich des Titanhydrids zusammen.

Auch bei anderen bekannten Verfahren wird Wasserstoff als Treibmittel zur Herstellung anorganischer Schäume eingesetzt: So ist es bekannt, stark alkalische Alkalimetallsilikate oder Alkalimetallaluminate mit einem Pulver eines unedlen Metalls, vorzugsweise Aluminium, zu mischen, wobei sich das Metall löst und Wasserstoff als Treibgas entwickelt wird. Nach dem Trocknen der Schäume müssen diese mit Ammoniumverbindungen behandelt werden, um nachteilig wirkende Alkalimetallionen zu entfernen. Nach dem Sintern können derartige Schäume weniger als 0,5% Alkalimetallionen enthalten (EP-A 344 284, DE-A 38 16 893).

Ein "trockenes" Verfahren, keramische Schäume herzustellen, besteht darin, keramische Pulver mit vulkanischen Eruptionsprodukten zu vermischen, welche beim Erhitzen auf 900 - 1400 °C die entstehende Schmelze unter Gasentwicklung aufblähen (JP-A 6 0221 371). So hergestellte Schäume dienen vor allem als wärmeisolierendes (geschlossenzelliges) Baumaterial.

Die JP-A 2/290211 beschreibt ein Verfahren zur Herstellung keramischer Metallschmelzefilter, in dem Harzpartikel verschiedener Größe, vorzugsweise aus geschäumtem Polystyrol, miteinander verbunden werden und die Zwischenräume mit einem keramischen Schlickermaterial infiltriert werden. Die organischen Bestandteile werden nach dem Trocknen bei 500 - 600 °C herauspyrolysiert, danach wird der Schaum bei 1200 - 1800 °C an Luft gesintert.

Offene Kanäle in keramischen Schäumen können auch erzeugt werden, indem man kurze organische Fasern wie Baumwolle, Polyamidfasern, Acrylfasern oder auch anorganische Fasern wie Graphitfasern auf eine klebende Unterlage aufbringt, weitere Fasern mit einem organischen Bindemittel aufbringt, das Fasergelege mit anorganischem Schlickermaterial infiltriert, trocknet, pyrolysiert und sintert (EP-A 341 203). So sollen Schäume mit weniger als 35% Porenvolumen erzeugt werden. Anwendungen sind Filter für geschmolzene Metalle.

In der DE-C 846 525 wird die Herstellung poröser Formkörper durch Aufschäumen eines Wasser enthaltenden Gemischs beschrieben. Das Aufschäumen erfolgt ausschließlich durch Zersetzung eines Treibmittels bei einer Temperatur unterhalb des Siedepunkts von Wasser.

In der DE-C 904 272 wird ein ähnliches Verfahren zur Herstellung von Schleifkörpern beschrieben, die aber nicht offenzellig sind.

In Chem. Abstr., Vol. 115, No. 18, 4. November 1991, No. 188 456a wird ein ähnliches Verfahren beschrieben.

Schließlich ist es auch bekannt, keramische Schäume zu erzeugen, indem man wäßrige keramische Schlickermaterialien mit wäßrigen Polymerdispersionen versetzt, die Mischung wie Sahne zu einem Schaum schlägt, bis er das 1,5- bis 10-fache des Anfangsvolumens einnimmt, den Schaum in eine Form einlaufen läßt, trocknet, die organischen Hilfsstoffe herauspyrolysiert und dann sintert (EP-A 330 963). Dabei beträgt der Gewichtsanteil an anorganischem Material 65 - 95%, der Gewichtsanteil an Dispersion (Trockenmasse) 5 - 35%, der durch Pyrolyse entfernt werden muß. Nachteilig für die Anwendungen solcher offenzelliger anorganischer Schäume ist, daß auch größere Luftblasen eingeschlagen werden und daß ein großer Teil der Schaumzellen geschlossen ist. Beim Schlagen wird Luft eingeschlossen, die gebildeten Zellen werden durch die Polymerdispersion stabilisiert und beim Trocknen nur teilweise gesprengt.

Bei Versuchen, die Reaktivkomponenten von Polyurethanschäumen hoch mit anorganischen Pulvern zu füllen und durch deren Reaktion miteinander einen hochgefüllten offenzelligen Polyurethanschaum direkt zu erzeugen, aus dem sich aufgrund der Offenzelligkeit die organischen Bestandteile herauspyrolysieren ließen, ergeben sich Probleme. Die Molmasse der Komponenten zu Beginn des Aufschäumens ist nämlich so gering, daß die aufschäumende Mischung nicht elastisch genug ist, wodurch die Schaumbläschen zu früh aufplatzen und das Treibgas, CO₂, weitgehend ungenutzt entweicht Es bilden sich aufgrund der mangelnden Elastizität auch rasch Risse in der Masse aus, aus denen das Treibgas ebenfalls ungenutzt verstömt.

Gegenstand der Erfindung ist ein kontinuierliches Verfahren zur Herstellung von offenzelligen, anorganischen Sinterschaum-Produkten.

Das erfindungsgemäße Verfahren ist dadurch gekennzeichnet, daß
a. Schlickermaterial durch Vermischen von sinterfähigem anorganischen Pulver mit Wasser, einem Dispergiermittel und einem organischen Bindemittel hergestellt und kontinuierlich zwangsgefördert wird,
b. das zwangsgeförderte Ausgangsgemisch kontinuierlich einer Druckerzeugungsstufe derart unterzogen wird, daß das Wasser zumindest teilweise, aber im wesentlichen ohne Volumenveränderung und unter Druckerhöhung durch Aufheizen auf eine Temperatur von 100 bis 200°C im Ausgangsgemisch verdampft und dadurch ein unter Druck stehendes Ausgangsgemisch gebildet wird,
c. das unter Druck stehende Ausgangsgemisch kontinuierlich in ein unter niedrigerem Druck als dem des unter Druck stehenden Ausgangsgemischs stehenden Volumens unter Bildung eines Ausgangsgemisch-Schaums expandiert wird, wobei die Fließfähigkeit des Ausgangsgemisch-Schaums unter Ausbildung eines offenporigen Zwischenkörpers im wesentlichen beseitigt wird,
d. der Ausgangsgemisch-Schaum zu einem Grünschaumkörper umgewandelt wird, wobei verbleibendes Wasser,sowie ggf. weiteres Material aus dem Ausgangsgemisch-Schaum entfernt wird, und
e. der Grünschaumkörper zu dem offenzelligen anorganischen Sinterschaum-Produkt gesintert wird.

Gemäß einer bevorzugten Ausführungsform enthält das Schlickermaterial zusätzlich ein Treibgas bildendes Material.

Gemäß einer weiteren bevorzugten Ausführungsform ist das Verfahren durch folgenden Merkmale gekennzeichnet:
a. Die Zwangsförderung erfolgt in einem kontinuierlich arbeitenden Schneckenextruder, vorzugsweise einem Zweiwellenschneckenextruder;
b. Der Zwangsförderstufe werden voneinander getrennt anorganisches Pulver und die übrigen Materialien so zugeführt, daß deren Vermischung zu einem Schlickermaterial erst in der Zwangsförderstufe erfolgt;
c. Es wird ohne zusätzliches Treibmittel gearbeitet, und das zwangsgeförderte Gemisch wird zum Verdampfen zumindest eines Teils des Wassers auf eine Temperatur im Bereich von 100 bis 200 °C in mehr als einer Stufe ansteigend aufgeheizt, wobei der sich bildende Ausgangsgemisch-Schaum durch den durch die Verdampfung erfolgenden Wasserentzug zellstabilisiert wird;
d. In den Zwangsförderer werden voneinander getrennt anorganisches Pulver und eine Mischung aus Wasser, Dispergiermittel und Bindemittel zugeführt;
e. Das Ausgangsgemisch in dem Zwangsförderer wird in einem Heizbereich des Zwangsförderers erwärmt;
f. Der Ausgangsgemisch-Schaum wird durch Trocknen in den Grünschaumkörper umgewandelt;
g. Der Grünschaumkörper wird auf die Sintertemperatur des anorganischen Pulvermaterials mit einer Erwärmungsgeschwindigkeit von 2 bis 20°C/min gebracht;
h. Zur Beendigung des Verfahrens wird zunächst die Heizung des zwangsgeförderten Materials derart zurückgefahren, daß im wesentlichen keine Verdampfung des verdampfbaren Materials in dem Zwangsförderer mehr erfolgt, und danach wird der Zwangsförderer entleert.

Die Beseitigung der Fließfähigkeit des Schlickermaterials im Verfahrensabschnitt c. erfolgt bevorzugt durch Entfernen von Wasser und eine Erhöhung des Volumenfüllgrades des Schlickermaterials.

Vorzugsweise trägt der poröse Körper zumindest auf den Porenflächen ein katalytisch aktives Material oder ein zu einem katalytisch aktiven Material umwandelbares Material.

Anorganische Sinterschäume werden bei der bevorzugten Ausführungsform aus wäßrigen Schlickern derart aufgeschäumt, daß sich die Fließeigenschaften des Materials während des Aufschäumens so ändern, daß die offene Porenstruktur stabilisiert wird. Dabei werden während des Schäumens polymere Hilfsstoffe vernetzt. Es ist möglich, während des Aufschäumens soviel Wasser zu verdampfen, daß die Zellwände stabilisiert werden und nicht mehr zusammenfallen, obwohl bei Zellöffnung die stabilisierende Druckdifferenz entfällt. Es kann auch Wasser-dampf als Treibgas benutzt werden. Beim Schäumen bei Temperaturen oberhalb 100°C wird gegen Atmosphärendruck entspannt, wobei die Masse außchäumt. Simultan verdampft ein Teil des Wassers, wobei wegen des Wasserverlusts die Viskosität stark ansteigt und das geschäumte Material infolge seiner Fließgrenze sich nicht mehr verformt.

Wenn als Treibmittel Kohlendioxid verwendet wird, wird die Schlickermasse komplett vorgemischt und in einer Schneckenpresse durch Erwärmen auf 60 - 100°C Kohlendioxid als Treibmittel entwickelt.

Die erfindungsgemäß hergestellten Schäume oder Schaumkörper sind offenaellig, weisen eine schmale Zellengrößenverteilung vorzugsweise im Bereich von 0,1 - 2 mm sowie einen Porenanteil insbesondere von mehr als 70% des Volumens auf.

Bevorzugt sind Schäume, die keine die Anwendungen störenden silikatische Phasen, Phosphate oder Alkalimetalle aufweisen, eine hohe mechanische Stabilität haben, im Grünzustand höchstens etwa 10 Gew. % organische Hilfsmittel enthalten sowie im geschäumten grünen Zustand bereits offenporös sind, um langwieriges Trocknen oder Pyrolysieren von organischen Hilfsstoffen zu vermeiden. Die Kombination dieser Forderungen wird nicht von den Verfahren des Standes der Technik erfüllt. Sie ist jedoch wünschenswert, um beispielsweise Kolonnenpackungen in Trennverfahren der chemischen Industrie wirtschaftlich herzustellen oder Träger für die verschiedensten heterogen katalysierten chemischen Reaktionen zu schaffen. Dazu sind auch monolithische Packungen mit Durchmessern bis zu einem halben Meter und mehreren Dezimetern Höhe erwünscht. Andererseits werden auch Granulate mit 2 - 30 mm Ausdehnung für derartige Anwendungen gebraucht. Die obigen Mengen- und Abmessungsangaben charakterisieren bevorzugte Ausgestaltungen von Produkt und Verfahren gemäß der Erfindung.

Eine weitere bevorzugte Ausführungsform des wird ein Verfahren zur Herstellung von offenzelligen anorganischen Sinterschaumprodukten zur Verfügung gestellt. Dieses Verfahren zeichnet sich aus durch die folgenden Verfahrensstufen:
a. Zunächst wird ein Ausgangsschlicker oder Schlickermaterial aus sinterfähigem anorganischem Pulver, Wasser und einem Schaumgas bildenden Material in einer kontinuierlich arbeitenden Schäumstufe unter Freisetzung des Schaumgases in ein geschäumtes Produkt umgewandelt. Dabei soll das Schaumgas bildende Material das (meist unter Druck) gelöste Schaumgas selbst als auch solche Materialien umfassen, die bei niedrigen Temperaturen, insbesondere bei Temperaturen unter 200 °C, ein Gas, insbesondere Wasserdampf oder CO₂, abgeben. Das fluide Material und das Schaumgas bildende Material können gleich sein. In dieser Stufe wird vorzugsweise ein offenzelliger Schaum erzeugt.
b. In einer nächsten Stufe wird dann dieses geschäumte Produkt einer Behandlung ausgesetzt, die die Fließfähigkeit des Schlickermaterials im wesentlichen beseitigt.

Diese beiden Schritte a und b. können auch im wesentlichen gleichzeitig ablaufen. Bei diesem Verfahren in den Stufen a. und b. bleibt das anorganische Pulver weit unter dessen Schmelzpunkt oder Zersetzungspunkt oder seiner Sintertemperatur. Insbesondere erfolgt also keine Verschäumung von fluidem oder geschmolzenem Metall.
c. Das verbleibende Wasser sowie ggf. weiteres Material wird dann aus dem Zwischenkörper unter Ausbildung eines Grünschaumkörpers entfernt.
d. Schließlich wird der Grünschaumkörper, ggf. nach einer Zwischenbehandlung, zu einem offenzelligen anorganischen Sinterschaumprodukt gesintert. Als eine Zwischenbehandlungsstufe kommt dabei insbesondere eine Reduktion in Frage, um aus Oxiden die reinen Metalle herzustellen. Es ist aber auch möglich, aus einer Mischung von Oxid- und Metallpulver aus dem Metallpulveranteil durch Oxidation besonders feinteilige Metalloxide herzustellen, die sich an der Oberfläche der Schaumstege anreichern.

Bei einer Ausführungsform des erfindungsgemäßen Verfahrens wird das Schlickermaterial im fließfähigen Zustand mit Hilfe eines darin enthaltenen Treibmittels und/oder eines darin enthaltenen Treibmittelprecursors in der Stufe a. aufgeschäumt.

Als solche Treibmittel oder Treibmittelprecursor kommen insbesondere Kohlendioxid und Wasserdampf (besonders Wasserdampf unter 4 - 8 bar) sowie entsprechende Verbindungen, die H₂O oder CO₂ freisetzen, in Frage.

Erfindungsgemäß ist es bevorzugt, die Fließfähigkeit des Schlickermaterials nach oder während der Aufschäumstufe dadurch zu erniedrigen, daß eine Erhöhung des Volumenfüllgrades des Schlickermaterials erfolgt, insbesondere eine Erhöhung des Volumenfüllgrades um 0,5 - 5%, vorzugsweise 1 - 3%. Der Volumenfüllgrad des Schlickermaterials kennzeichnet den Volumenprozentsatz im Ausgangsschlicker, der durch die anorganischen Pulverpartikel eingenommen wird. Er wird aus dem Verhältnis des Volumens der anorganischen Pulverpartikel (Gewicht dividiert durch Dichte) und dem Gesamtvolumen des Schlickermaterials bestimmt.

Die obige Angabe zu dem bevorzugten Bereich für die Erhöhung des Volumenfüllgrads von 0,5 - 5%, vorzugsweise 1 - 3%, bezieht sich auf Prozentpunkte des Schlickermaterials. Bei einem Volumenfüllgrad des Schlickermaterials von beispielsweise 47% wird dieser Volumenfüllgrad vorzugsweise auf 48 - 50% erhöht.

Bei dem erfindungsgemäßen Verfahren zur Herstellung der offenzelligen anorganischen Sinterschaum-Produkte ist es bevorzugt, ein Schlickermaterial einzusetzen, welches flüssiges Wasser enthält, das zur Beseitigung der Fließfähigkeit des Schlickermaterials zumindest zum Teil in das Schlickermaterial verschäumenden Dampf umgesetzt wird. Diese Verdampfung des flüssigen Wassers erfolgt nach einer Arbeitsweise der Erfindung durch Mikrowellenerwärmung oder Infraroterwärmung oder Erniedrigung des Umgebungsdrucks eines auf bis 100 °C vorgeheizten Ausgangsschlickermaterials.

Die für das erfindungsgemäße Verfahren besonders geeigneten anorganischen Pulvermaterialien sind eines oder mehrere der folgenden Produkte:
Metallpulver
mineralische Pulver
Keramikpulver
Metallcarbidpulver
Metallnitridpulver

Schlickermaterialien, die sich für das erfindungsgemäße Verfahren besonders gut eignen, haben folgende Zusammensetzung:

| | | |
|---|---|---|
| a. | anorganisches Pulver inklusive Sinterhilfsmittel | 30 - 60 Vol.-Teile |
| b. | verdampfbare Flüssigkeit, insbesondere Wasser | 30 - 60 Vol.-Teile |
| c. | Dispergator | 0 - 4, vorzugsweise 0,5 - 3 Vol.-Teile |
| d. | Bindemittel | 2 - 20, vorzugsweise 4 - 15 Vol.-Teile |
| e. | Treibmittel | 0 - 4, vorzugsweise 1 - 3 Vol.-Teile |
| f. | Treibmittelprecursor | 0- 8, vorzugsweise 2 - 6 Vol.-Teile |

Es ist erfindungsgemäß bevorzugt, das Schlickermaterial vor oder während der Aufschäumstufe einer Formgebung zu unterziehen. Insbesondere kann das Schlickermaterial extrudiert werden, wobei die Verschäumung gleich im Anschluß an eine Extrusion erfolgt. Eine weitere Methode, die erfindungsgemäß immer dann bevorzugt ist, wenn definierte Einsätze von porösem Material erwünscht sind, besteht darin, das Schlickermaterial in eine Form einzubringen und in dieser Form zu verschäumen. Dabei können insbesondere zylindrisch geformte oder plattenförmige Sinterschaumprodukte hergestellt werden.

Erfindungsgemäß bevorzugt ist es, die Sinterschaumkörper in einem kontinuierlich arbeitenden Verfahren herzustellen. Bei diesem Verfahren mird sinterfähiges, anorganisches Pulver, Wasser und ggf. ein Treibgas bildendes Material miteinander zu einem Ausgangsgemisch vermischt und kontinuierlich zwangsgefördert. Das zwangsgeförderte Ausgangsgemisch wird kontinuierlich einer Druckerzeugungsstufe derart unterzogen, daß das Wasser zumindest teilweise, aber im wesentlichen ohne Volumenveränderung und unter Druckerhöhung im Ausgangsgemisch verdampft und dadurch ein unter Druck stehendes Ausgangsgemisch gebildet wird, das unter Druck stehende Ausgangsgemisch kontinuierlich in ein unter niedrigerem Druck als dem des unter Druck stehenden Ausgangsgemischs stehendes Volumen unter Ausbildung eines Ausgangsgemisch-Schaums expandiert wird, der Ausgangsgemisch-Schaum zu einem Grünschaumkörper umgewandelt wird, und der Grünschaumkörper unter Ausbildung des Sinterschaum-Produktes gesintert wird. Die Masse des unter Druck stehenden Ausgangsgemischs wird vorzugsweise unmittelbar (sofort) nach Austritt aus einer Düse gegen Normaldruck aufgeschäumt.

Bevorzugte Ausführungsformen dieses kontinuierlichen Verfahrens zeichnen sich durch eines oder mehrere der folgenden Merkmale aus:
c) In das Ausgangsgemisch wird ein als Dispergator bevorzugt ein ionisches oder sterisches Dispergiermittel eingebracht;
d) In das Ausgangsgemisch Mird als Bindemittel ein organisches Bindemittel, bevorzugt ein wasserlösliches Polymer, eingebracht;
Schlickermaterialien, die sich für das erfindungsgemäß bevorzugte kontinuierliche Verfahren besonders gut eignen, haben folgende Zusammensetzung:

| | |
|---|---|
| a. anorganisches Pulver inklusive Sinterhilfsmittel | 30 - 60 Vol. -Teile |
| b. verdampfbare Flüssigkeit, insbesondere Wasser | 30 - 60 Vol.-Teile |
| c. Dispergator | 0 - 4, vorzugsweise 0,5 - 3 Vol.-Teile |
| d. Bindemittel | 2 - 20, vorzugsweise 4 - 15 Vol.-Teile |

Erfindungsgemäß wird ein poröser Körper aus miteinander verbundenen anorganischen Teilchen von 0,1 bis 50 im Größe, einem Porenvolumen von 50 bis 95%, einer Oberfläche von 0,01 bis 1 m²/g und unregelmäßigen Poren erhalten. Dieser poröse Körper zeichnet sich aus durch
- dicht gesinterte Stege unregelmäßiger Länge mit Längenunterschieden von 1: 1,5 bis 1 : 100,
- einem Verhältnis von Stegdurchmesser zu Teilchendurchmesser von 2 bis 10.000, vorzugsweise 5 bis 5.000.

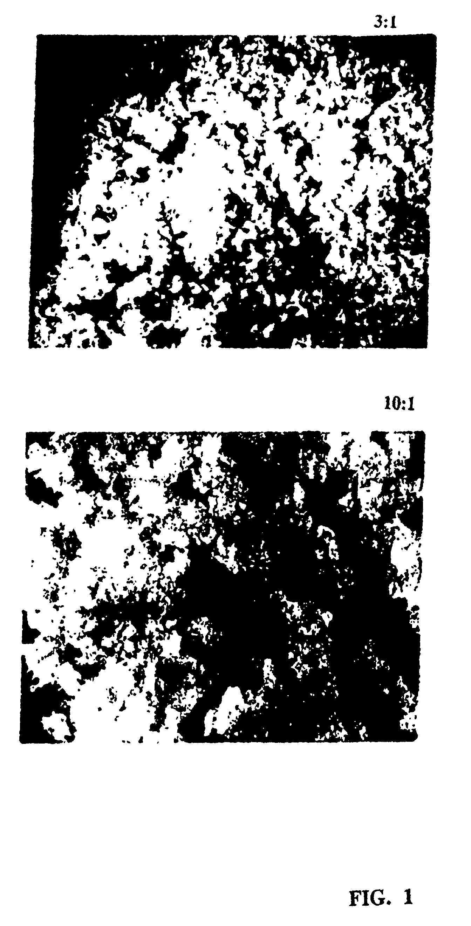

Der bevorzugte poröse Körper hat eine Struktur, wie sie im Ouerschnitt in der beigefügten Fig. 1 gezeigt ist, die eine Kopie einer 3 : 1 vergrößerten und einer 10: 1 vergrößerten Ansicht des erfindungsgemäßen porösen Körpers darstellt.

Der erfindungsgemäß hergestellte poröse Körper besteht vorzugsweise aus den oben definierten anorganischen Materialien. Besonders zweckmäßig wird dieser poröse Körper noch mit katalytisch aktivem Material oder zu einem zu katalytisch aktivem Material umwandelbaren Material, insbesondere einem oder mehreren Edelmetallen, versehen. Dann handelt es sich bei solchem porösen Körper um einen (ggf. noch zu aktivierenden) Katalysator. Die Metalle bzw. Edelmetalle sind dabei in einer Menge von 0,1 - 5 Gew.-% bezogen auf den gesamten porösen Körper, vorhanden. Besonders geeignete katalytisch aktive Materialien für solche porösen Körper sind Platin, Palladium, Kobalt, Nickel, Eisen oder Kupfer.

Diese oben erwähnte Kombination an Anforderungen wird erfindungsgemäß bevorzugt erfüllt durch die Dispergierung eines anorganischen Pulvers a in Wasser, wobei der Volumenanteil des anorganischen Pulvers in dem so hergestellten Schlickermaterial mindestens dem unten angegebenen Volumenfüllgrad entspricht, unter Einsatz eines Dispergators c, der Zugabe eines Bindemittels d und, soweit nicht Wasserdampf als Treibmittel benutzt wird, eines ein Treibgas erzeugenden Treibmittels e bzw. eines Treibmittelprecursors f. Das so erhaltene Schlickermaterial wird unter der Einwirkung des Treibgases, das sich gegen den Atmosphärendruck entspannt, aufgeschäumt, der offenzellige Schaum, soweit notwendig, durch die Verdampfung einer geringen Menge Wassers unter Wärmeeinwirkung stabilisiert, der grüne Schaumkörper sodann getrocknet, die organischen Additive während des Hochheizens zur materialadäquaten Sintertemperatur entfernt und der Schaumkörper danach gesintert, wobei dichte Stege ausgebildet werden und der Schaumkörper selbst um den Volumenteil schrumpft, den vorher Wasser und Additive innehatten.

Es ist zur Erzielung der Gesamtheit der erfindungsgemäßen Ziele bevorzugt, daß das anorganische Schlickermaterial einen Volumenanteil oder Füllgrad aus anorganischem sinterbarem Pulver hat, für den näherungsweise gilt: FG ≥ 30: (1 + 0,1 x BET) + 20. Es werden dann insbesondere Stege hoher mechanischer Festigkeit erhalten. Dabei bedeutet BET die BET-Oberfläche der Pulver in m²/g und FG der Füllgrad in Vol.-%. Die Beziehung gilt für Pulver mit BET-Oberflächen von 0,1 bis 300 m²/g. Bei keramischen Pulvern mit BET-Oberflächen um 5 m²/g beträgt der Füllgrad damit mindestens etwa 40 Vol.-%, bei Metallpulvern mit BET-Oberflächen um 0,5 m²/g dagegen mindestens etwa 49 Vol.-%.

Es ist weiterhin bevorzugt, daß die Viskosität des Schlickermaterials durch den Volumenanteil anorganischen sinterfähigen Pulvers sowie durch das Bindemittel so eingestellt werden kann, daß es gerade noch unter seinem Eigengewicht fließt und daß bei Wasserverlust von 0,5 - 5 Vol.-%, insbesondere 1 - 3 Vol.-% die Fließgrenze erreicht ist. Dadurch kann der Schaumkörper nach dem Schäumen leicht stabilisiert werden, das bedeutet am Zusammenfallen gehindert werden. Dieser Vorteil bietet sich bei Schlikkermaterialien mit hohem Volumenfüllgrad, weil bei hohem Volumenfüllgrad die Fließgrenze durch eine geringe Füllgraderhöhung erreicht wird.

Der hohe Volumenfüllgrad bietet eine weitere Möglichkeit, die in der Erfindung genutzt wird, nämlich das strukturviskose Verhalten von mit Partikeln hochgefüllten fließfähigen Massen auszunutzen. Bei hohen Scherraten, die man vorteilhaft beim Anmischen der erfindungsgemäßen Schlickermaterialien und beim Einfüllen in eine Form anwendet, ist die Viskosität der Schlickermaterialien niedrig. Sie steigt nach Beendigung der Scherung an, wodurch ebenfalls die Schaumstabilität erhöht wird.

Das anorganische Pulver a dient zum Aufbau der Stege des offenzelligen anorganischen Schaums. Dabei handelt es sich um keramische Materialien vorzugsweise aus der Gruppe Aluminiumoxid, Zirkonoxid mit Magnesiumoxid oder Yttriumoxid teilweise oder ganz stabilisiert, Siliciumcarbid, Siliciumnitrid inklusive seiner gängigen Sinterhilfsmittel wie Aluminiumoxid und Yttriumoxid, Cordierit, Mullit, Wolframcarbid, Titancarbid, Tantalcarbid, Vanadiumcarbid, Titannitrid, Tantalnitrid oder Metallpulver, vorzugsweise ausgewählt aus der Gruppe Eisen, Kobalt, Nickel, Kupfer, Silber, Titan, Stahlpulver oder Legierungspulver von eisen-, nickel- oder kobaltbasierten Legierungen. Es können auch Keramikpulver mit Gehalten anderer Materialien, beispielsweise Metallen, eingesetzt werden.

Die keramischen Pulver können auch untereinander gemischt sein. Carbide, Nitride oder Metallpulver können ebenfalls untereinander und miteinander gemischt sein.

Die mittleren Korngrößen der bevorzugt eingesetzten keramischen Pulver betragen 0,1 - 10 *µ*m, insbesondere 0,3 - 2 *µ*m; die Korngrößen der Metallpulver sind bevorzugt 1 - 50 *µ*m, insbesondere 2 - 20 *µ*m.

Als Dispergator c werden entweder ionische oder sterische Dispergiermittel eingesetzt. Ionische Dispergiermittel wie Salpetersäure oder Ameisensäure verleihen den zu dispergierenden Pulvern eine gleichnamige und deshalb abstoßende Oberflächenladung, deshalb können die einzelnen Teilchen leicht aneinander abgleiten. Sie erniedrigen die Viskosität und ermöglichen so einen vorteilhaft hohen Füllgrad. Säuren sind als Dispergiermittel nicht für unedle Metalle geeignet, weil sie durch Oxid- oder Salzbildung an der Oberfläche der Metallpulver die Fließfähigkeit der Schlickermaterialien herabsetzen. Sterisch wirkende Dispergatoren weisen eine Tensidstruktur auf, mit einer Haftgruppe ziehen sie auf die zu dispergierenden Pulver auf und bewirken so ebenfalls niedrige Viskositäten und hohe Füllgrade. Derartige Dispergatoren sind beispielsweise Tetramethylammoniumoleat oder Tetrabutylammoniumoleat. Zur Dispergierung der keramischen Pulver sind 0,5 - 3% bezogen auf die Pulvermasse genügend, zur Dispergierung der größeren Metallpulver werden 0,01 - 0,5% bezogen auf die Pulvermasse bevorzugt. Die Angaben sind auf das Gesamtgewicht des Schlickermaterials bezogen.

Das Bindemittel d dient bevorzugt zur mechanischen Verfestigung der Masse nach dem Schäumvorgang sowie gegebenenfalls zur Erhöhung der Dehnbarkeit beim Aufschäumen. Dispergiermittel und Bindemittel wirken gegeneinander. Je weniger Dispergiermittel eingesetzt wird, desto weniger Bindemittel wird eingesetzt. Die Menge an festem Bindemittel beträgt 1 - 6% bezogen auf das eingesetzte anorganische Pulver. Als Bindemittel werden vorzugsweise wasserlösliche Polymere wie Polyvinylalkohol, Stärke, methylierte Stärke, Alginate, Hydroxymethylcellulose, Polyacrylsäure, Polyacrylamid, Polyethylenimin, Polyvinylamin, Polyvinylformamid oder Polyvinylpyrrolidon eingesetzt. Eine andere Klasse von Bindemitteln sind wäßrige Polymerdispersionen auf der Basis von Styrol/Butadien-Copolymerisaten oder Acrylaten. Beim Verdampfen des Wassers bilden sie Filme aus, welche die anorganischen Pulverkörnchen zusammenhalten. Als anorganisches Bindemittel kann, soweit es das stegbildende Material zuläßt, Aluminiumhydroxid eingesetzt werden.

Als Treibmittel wird bevorzugt Wasserdampf eingesetzt. Werden erfindungsgemäße Schlickermaterialien gegen Atmosphärendruck geschäumt, so verdampft ein Teil des Wassers, wobei wegen des Wasserverlusts die Viskosität stark ansteigt und das geschäumte Material infolge seiner Fließgrenze sich nicht mehr verformt. Es ist aber auch möglich, das Schlickermaterial auf eine Temperatur unterhalb von 100 °C vorzuwärmen und dann durch Erniedrigung des Umgebungsdrucks durch Verdampfen des Wassers aufzuschäumen.

Als Treibmittel e werden bevorzugt Ammoniumcarbonat, Ammoniumcarbamat oder Ammoniumhydrogencarbonat eingesetzt, die bei Temperaturen oberhalb 50 °C Kohlendioxid und Ammoniak abspalten, wobei hauptsächlich das Kohlendioxid wegen seiner geringen Wasserlöslichkeit als Treibmittel wirkt. Die Ammoniumcarbonate werden in Mengen von 0,5 bis 2% bezogen auf die Masse des anorganischen Pulvers eingesetzt. Es kann aber auch Kohlendioxid direkt als Treibmittel eingesetzt werden, wozu das Schlickermaterial bei Raumtemperatur unter Druck mit Kohlendioxid gesättigt und dann gegen Normaldruck entspannt wird.

Precursoren von Treibmittel e bilden das Treibgas erst durch chemische Reaktion miteinander. So bewirkt ein Zusatz von pulverförmigem, in Wasser unlöslichem Phthalsäureanhydrid dessen langsame Hydrolyse zu Phthalsäure beim Raumtemperatur. Diese setzt dann aus den Treibmitteln D Kohlendioxid als Treibmittel frei, und zwar langsamer als beim Erhitzen oder dem Zusatz einer freien Säure. Dabei wird beispielsweise aus Ammoniumcarbonat oder Ammoniumhydrogencarbonat schneller Kohlendioxid freigesetzt als aus Ammoniumcarbamat. Damit dient die Kombination Ammoniumcarbamat/ Phthalsäureanhydrid zum langsamen Treiben. Weitere Carbonsäureanhydride, die so eingesetzt werden können, sind Pyromellithsäuredianhydrid oder Maleinsäuredianhydrid, wobei Maleinsäureanhydrid unter den aufgeführten Carbonsäureanhydriden am reaktivsten ist und damit ein schnelles Aufschäumen erreicht wird.

Aufgrund des langsamen, kontrollierten Auftreibens des Schaums wird der anfängliche Bruch von Zellen oder die Bildung von Rissen vermieden und das Treibgas besser ausgenutzt, und damit werden höhere Porenvolumenanteile erhalten.

Die Schäumgeschwindigkeit kann eingestellt werden, indem man Carbonsäureanhydrid-Pulver verschiedener Korngrößen benutzt. Je größer das Korn, desto geringer ist die Hydrolysegeschwindigkeit. Je kleiner das Carbonsäureanhydridkorn ist, desto größer sind seine spezifische Oberfläche, die Hydrolysegeschwindigkeit und die Schäumgeschwindigkeit. Optimale Korngrößen liegen im Bereich von 1 bis 200 *µ*m, vorzugsweise von 10 bis 100 *µ*m.

Dient Ammoniumhydrogencarbonat als Treibmittel, so stellt man ein Verhältnis von Säureäquivalent zu Treibmittel von 1 : 0,8 bis 1 : 1,2 ein, vorzugsweise werden Treibmittel und Säurebildner im äquivalenten Verhältnis gemischt. Gerade diese Möglichkeit der Treibgasbildung führt besonders wirtschaftlich zu hochwertigen großen anorganischen Schaumformteilen.

Die einzusetzenden Materialien werden so aufeinander abgestimmt, daß das gewünschte Verhalten erzielt wird. Eine auf einer Säure basierende ionische Dispergierung wird vorzugsweise mit Polymerdispersionen als Bindemittel kombiniert, die in saurem Milieu nicht ausflocken.

Die folgenden Varianten lassen sich vorteilhaft durchführen:
a. Ionische Dispergierung keramischer Schlickermaterialien oder von Schlickermaterialien aus Metallpulvern, die positiver als Wasserstoff sind, gebunden mit wasserlöslichen Polymeren. Sie können aufgeschäumt werden durch Einrühren von Kohlendioxid in einem Druckgefäß bei Raumtemperatur und Entspannen bei CO₂-Drücken von 3 - 10 bar gegen Atmosphärendruck oder ohne Benutzung eines Druckgefäßes durch Einrühren von Ammonium(hydrogen)carbonat während des Einrührens. Wenn der Schaum, z.B. durch einen IR-Strahler, gelinde erwärmt wird, verdampft soviel Wasser, daß der Schaum ohne zu kollabieren stehenbleibt.
   Nach Erhitzen der Schlickermaterialien in einem Druckgefäß auf 120 - 160 °C lassen sich die Schlickermaterialien unter dem eigenen Wasserdampfdruck gegen Atmosphärendruck verschäumen. Dabei verdampft soviel Wasser, daß der Schaum nicht kollabiert. Durch rasches Öffnen und Schließen des Ablaßventils werden geschäumte Granulate erzeugt; durch chargenweises Einspritzen in eine leicht perforierte Form werden geschäumte Formteile erzeugt.
b. Sterische Dispergierung keramischer Schlickermaterialien, gebunden mit wasserlöslichen Polymeren oder mit Polymerdispersionen und Ammonium(hydrogen)carbonat als Treibmittel. Sie können in Mikrowellengeräten in Formen erhitzt werden, wobei das Schäumen innerhalb weniger Sekunden erfolgt, begleitet von Verdampfen von Wasser. Aufschäumen, Verdampfen von Wasser und damit die Verfestigung erfolgen praktisch simultan. Es werden stabile Formteile erhalten. Wegen der elektrischen Leitfähigkeit ist diese Variante nicht für Metallschäume anwendbar.
   Dennoch lassen sich über diese Route Metallschäume aus für die Katalyse wichtigen Metallen wie Fe, Ni, Co, Cu, Ag herstellen, indem man nämlich die entsprechenden Oxidpulver oder deren Mischungen einsetzt, die Schlickermaterialien im Mikrowellenfeld schäumt und nach Trocknen und Pyrolysieren unter Wasserstoff reduzierend zu den Metallschäumen sintert.
c. Sterische Dispergierung keramischer oder metallischer Schlickermaterialien, gebunden mit wasserlöslichen Polymeren oder mit Polymerdispersionen. Sie können aufgeschäumt werden durch Einrühren von Kohlendioxid in einem Druckgefäß bei Raumtemperatur und Entspannen bei CO₂-Drücken von 2 - 10 bar gegen Atmosphärendruck. Die Erwärmung des Schaums, z.B. mittels eines IR-Strahlers, direkt nach der Extrusion bewirkt die Verdampfung von soviel Wasser, daß die Fließgrenze des geschäumten Schlickermaterials erreicht wird.
d. Sterische Dispergierung keramischer oder metallischer Schlickermaterialien, gebunden mit hochmolekularen wasserlöslichen Polymeren zur Erhöhung der Zähigkeit/Elastizität. Die Schlickermaterialien enthalten Ammoniumcarbonat, Ammoniumcarbamat oder Ammoniumhydrogencarbonat. Kurz vor dem Aufschäumen wird Carbonsäureanhydridpulver eingerührt und die Masse dann in einer Form oder nach dem Auspressen aus einer Strangpresse als Strang aufgeschäumt.

Besonders bevorzugt sind die Varianten b. und d., weil sie die Herstellung großer Schaumteile ermöglichen und ohne kostspielige Druckapparaturen auskommen.

Die Herstellung der Schlickermaterialien für die Schäume erfolgt ohne zusätzliche aufwendige Apparaturen in konventionellen Mischern oder Knetern. Das Einstellen der optimalen Viskosität erfolgt am einfachsten nach Augenschein. Es wird zur Rezeptur jeweils soviel Pulver, Dispergator oder Wasser zugegeben, bis das Schlickermaterial unter seinem eigenen Gewicht gerade noch fließfähig ist. Je nach Pulverkomgröße bzw. Pulveroberfläche ist der Volumenfüllgrad, bei dem die Fließgrenze erreicht wird, verschieden. Bei den verhältnismäßig geringen Korngrößen keramischer Pulver von 0,3 bis 2 im wird die Fließgrenze bei 40 - 50 Vol.-% erreicht; bei den größeren Metallpulvern mit 2 - 20 im mittlerem Komdurchmesser wird die Fließgrenze bei 50 - 60 Vol.-% erreicht.

Die Fertigung der erfindungsgemäßen offenzelligen anorganischen Schäume kann sowohl diskontinuierlich als auch kontinuierlich erfolgen. Bei diskontinuierlicher Fertigung erfolgt das Schäumen nach der Ansatzbereitung falls erwünscht in einer Form. Um Granulate herzustellen, wird der Schlickermaterialansatz ggf. bereits vor dem Schäumvorgang zerteilt und danach die Granulate zu unregelmäßig geformten oder kugelförmigen Granulaten aufgeschäumt. Das geschäumte Teil wird bei 100 - 130 °C im Luftstrom getrocknet, dann wird mit einer Geschwindigkeit von 3 bis 5 °C/min bis auf 350 - 600 °C aufgeheizt, zur restlosen Entfernung der organischen Bestandteile die Masse 1 h bei 350 - 600 °C belassen und sodann zum eigentlichen Sinterprozeß weiter aufgeheizt, Fe, Co, Ni z.B. auf 800 - 1200 °C unter Wasserstoff, Cu auf 700 - 950 °C, ebenfalls unter Wasserstoff, Zirkonoxid unter Luft auf 1450 °C, Aluminiumoxid unter Luft auf 1650 °C oder Siliciumcarbid unter Argon auf 2250 °C.

Zur kontinuierlichen Fertigung nach Variante b. wird das Schlickermaterial diskontinuierlich bereitet, dann aber mittels einer kontinuierlich arbeitenden Schneckenpresse zu Strängen verarbeitet. Diese werden nach dem Austritt aus den Düsen auf einer sich auf einem Transportband mitbewegenden Unterlage durch ein Mikrowellenfeld gefahren, dort aufgeschäumt, in einer sich anschließenden Trockenstrecke nachgetrocknet. Es ist auch möglich, mit einer Schneckenpresse zu arbeiten, deren Zylinder nahe am Einzug ungeheizt ist, düsennah aber auf 60 - 100 °C beheizt wird. Damit wird das Schlikkermaterial einzugsnah verdichtet, gefördert und die Schneckenpresse zum Einzug hin gasdicht verschlossen. In den heißen düsennahen Zonen entwikkelt sich durch den thermischen Zerfall des Treibmittels oder der Treibmittelkombination Kohlendioxid, welches die Masse vor oder nach Düsendurchgang aufschäumt. Pyrolyse und Sintern schließen sich mit weiteren Prozeßstrecken an. Das Zerteilen zu Granulat kann direkt nach dem Strangpressen erfolgen.

Bei der kontinuierlichen Fertigung nach Variante d. wird wie bei b. verfahren mit dem Unterschied, daß die Carbonsäureanhydride als Säurebildner erst beim Einzug der Masse in die Schneckenpresse zudosiert wird. Ggf. enthält die Schneckenpresse noch ein Mischteil zur besseren Verteilung des Säurebildners. Auf die Mikrowellenerwärmung kann verzichtet werden.

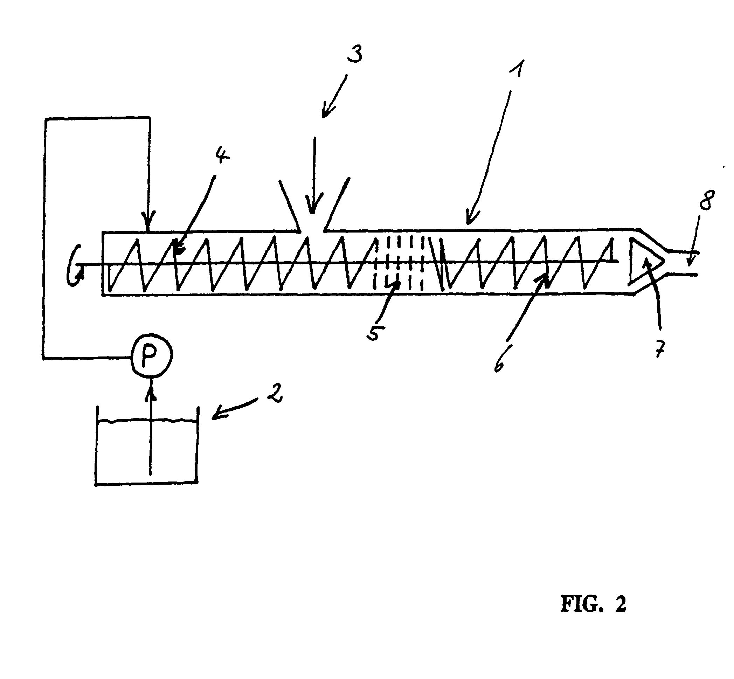

Eine bevorzugte technische Ausgestaltung des kontinuierlichen Verfahrens wird im folgenden unter Bezugnahme auf Fig. 2 beschrieben:

Bei dem kontinuierlichen Prozeß zur erfindungsgemäßen Herstellung der offenzelligen anorganischen Sinterschäume wird bevorzugt ein Zweiwellenextruder 1 eingesetzt, der baukastenartig mit verschiedenen Förder- und Knetelementen bestückt werden kann. Derartige Extruder werden in der Kunststoffverfahrenstechnik weithin zum Kompoundieren von thermoplasfischen Massen eingesetzt. Die Zweiwellen-Anordnung hat den Vorteil gegenüber Einwellenextrudern, daß das zu fördernde Material gegen hohe Drücke gefördert werden kann und sich aufgrund der "Zwangsfördercharakteristik" das Material nicht unter Stillstand der Förderung um die Schnecke wickeln kann.

Im Behälter 2 wird die wäßrige Lösung der Hilfsstoffe wie Dispergator und Binder vorgelegt. Der Behälter 2 steht auf einer elektronischen Waage, (nicht gezeigt), deren Ausgangssignal die Pumpe P steuert, um einen genau bemessenen Massestrom auf die Förderschnecken 4 (nur eine davon ist gezeigt) am Einzug des Extruders zu pumpen.

An der Stelle 3 wird das anorganische Pulver oder die anorganische Pulvermischung über eine kontinuierlich arbeitende und massenstromgeregelte Dosiervorrichtung zudosiert. An der Stelle 5 werden die beiden Schlickerkomponenten intensiv gemischt und zum eigentlichen Schlickermaterial vereinigt. Diese Prozeßschritte werden unter Raumtemperatur oder etwas erhöhter Temperatur, auf jeden Fall aber unterhalb des Siedepunkts des Wassers (100°C), durchgeführt. An der Stelle 6 ist der Extruder wieder mit Förderelementen bestückt; der Zylinder wird im Bereich der Stelle 6 so beheizt, daß die Schlickermasse Temperaturen zwischen 100 und 200°C, vorzugsweise zwischen 110 und 150°C annimmt. sprechend der Dampfdruckkurve des Wassers entwickelnden Wasserdampfdruck. Eine signifikante Volumenvergrößerung erfolgt wegen der geschlossene Kammern bildenden Struktur der beiden Extruderwellen nicht. Über den Verdränger 7 gelangt die Masse durch die Düse 8 in ein Aufnahmevolumen, um dort z.B. gegen Normaldruck zu expandieren. Der Verdränger wird bevorzugt eingesetzt, um die Druckdifferenz zwischen Extruderinnerem und dem Aufnahmedruck (z.B. Normaldruck) aufrecht zu erhalten.

Es hat sich als günstig erwiesen, in die Düse 8 eine einstellbare Drossel in Form eines Ventils einzubringen, um dadurch eine weitere Regelungsmöglichkeit zur Feinregulierung zu haben.

Die getrennte Dosierung von anorganischem Pulver und der Wasser-Hilfsmittel-Kombination ermöglicht es, die Viskosität des Schlickers während des Prozesses auf optimale Verhältnisse einzuregeln oder entsprechend der Variation der Schäumtemperatur (entsprechend dem Dampfdruck) noch zu regeln.

Dieses Nachregeln erfolgt nach visueller Begutachtung des geschäumten Materials. Es ist von großem Vorteil, daß die Verweilzeit im Extruder vorzugsweise nur etwa 2 bis 5 min beträgt, wodurch die Totzeit für das Nachregeln niedrig ist.

Zum Anfahren des Extruders bleiben alle Heizzonen zunächst unbeheizt. Man läßt den Extruder drehen und dosiert zunächst die wäßrige Hilfsmittellösung zu. Hat diese die Zone 3 erreicht, dann beginnt man mit der Pulverdosierung. Man regelt die Mengenströme so ein, daß ein weicher, halbfester Strang aus der Düse austritt. Nachdem ein stabiler Förderstrom erhalten ist, wird im Bereich 6 geheizt, um den Wasserdampfdruck zu entwickeln. Die Heiztemperatur richtet sich nach dem zu erreichenden Porositätsgrad. Bei den angegebenen Temperaturen bläht sich der Strang nach Austritt aus der Düse auf und kann abgetrennt (abgelängt) werden oder er bricht in Längen von 3 bis 50 mm ab.

Die Förderung wird während des Prozesses bevorzugterweise nicht unterbrochen, um zu verhindern, daß bereits innerhalb des Extruders Wasser verdampft und die Viskosität soweit ansteigt, daß der Extruder verstopft.

Das so hergestellte noch feuchte Schaumgranulat wird bei 110 bis 130°C in Luft getrocknet, kalziniert und anschließend bei materialadäquaten Temperaturen gesintert.

### BEISPIELE

### BEISPIEL 1

Es wird ein Doppelwellenextruder der Fa. Werner & Pfleiderer vom Typ ZSK 25 verwendet, die Länge des Verfahrensteils ohne Düsenkopf beträgt 0,825 m, das Verhältnis von Länge zu Durchmesser ist 33.

Am Einzug des Extruders wurden über eine massengeregelte Zahnradpumpe 880 g/h einer Lösung aus 576 g vollentsalztem Wasser, 144 g Polyvinylpyrrolidon (Luviskol® K 90, BASF) und 160 g einer 25 Gew.-%igen wäßrigen Zubereitung von Tetramethylammoniumoleat zudosiert. An der Stelle 3, ca. 300 mm nach der Lösungsdosierung, wurden 3250 g/h eines Aluminiumoxidpulvers (CT 3000 der Fa. Alcoa) mit ca. 0,9 *µ*m Korndurchmesser zudosiert. Über eine ca. 100 mm lange Kombination von Knetblöcken wurden die Komponenten zum Schlickermaterial vermischt und die Mischung durch eine Düse von 2,5 mm Durchmesser ausgetragen. Das Verfahrensteil des Extruders war in sieben gleich lange Heizzonen aufgeteilt. Nachdem eine konstante Förderung erreicht war, wurden die 5., 6. und 7. Zone, die nach dem Mischteil angeordnet waren, auf Temperaturen von 105, 110 und 125°C (Heizmediumtemperatur) respektive aufgeheizt. Daraufhin schäumte der aus der Düse austretende Strang in der gewünschten Weise auf. Die Strangstücke wurden gesammelt, 12 h bei 130°C getrocknet, sodann in einen Sinterofen überführt und mit einer Heizrate von 5°C/min von Raumtemperatur auf 300°C erhitzt, unter Luft 1 h bei 300°C belassen, dann mit 5°C/min auf 600°C aufgeheizt, 1 h bei 600°C belassen, dann mit 5°C/min auf 1.650 °C aufgeheizt, 3 h bei 1.650°C belassen und dann den Ofen unkontrolliert abkühlen gelassen.

Es wurden stabile, offenporige Granulate mit ca. 2,5 mm Durchmesser und 3 bis 10 mm Länge erhalten. Gegenüber den extrudierten Granulaten waren sie um ca. 20% in den linearen Dimensionen geschrumpft. Die Porengrößen lagen zwischen 0,1 und 0,5 mm, der Porenanteil betrug ca. 75%.

### BEISPIEL 2

In ein Becherglas mit ca. 7 cm Durchmesser und ca. 9 cm Höhe wurden 4 g einer wäßrigen Lösung aus 1 Teil Tetrabutylammoniumoleat und 3 Teilen Wasser eingewogen. Sodann wurden 7 g einer käuflichen Polyacrylesterdispersion mit einem Feststoffgehalt von ca. 50% (Acronal® S 360 D der BASF AG) hinzudosiert, sowie 2 g Ammoniumhydrogencarbonat. Mit destilliertem Wasser wurde auf 22 ml aufgefüllt. Die Mischung wurde mit einem Intensivmischer gemischt und dabei das Ammoniumhydrogencarbonat aufgelöst. Sodann wurden bei Raumtemperatur unter Rühren über einen Zeitraum von 30 min 80 g eines α-Aluminiumoxid-Pulvers mit einer mittleren Korngröße um 0,9 *µ*m und einer Dichte um 4,0 g/cm³ (Alcoa® CT 300) zugegeben, und zwar 80% der Menge innerhalb ca. 5 min, weitere 10% innerhalb weiterer 5 min und die restlichen 10% innerhalb 10 min. Danach wurde noch weitere 10 min gerührt, um Pulveragglomerate zu zerstören. Nach Entfernen des Rührers lag eine fließfähige Mischung vor. Das Becherglas samt Inhalt wurde in einem Haushaltsmikrowellenofen von 500 W Leistung in der Mitte des Drehtellers 30 s lang einem Mikrowellenfeld ausgesetzt. Das Schlickermaterial wurde von einem Anfangsvolumen von ca. 42 ml auf ein Volumen um ca. 200 ml auf das fünffache Volumen aufgeschäumt. Es wurde ein stabiler, etwas elastischer zylindrischer Schaumkörper erhalten. Der Volumenanteil an α-Aluminiumoxidpulver am Gesamtschaumvolumen betrug ca. 10%. Der Schaumkörper wurde bei 120 °C 2 h lang getrocknet und sodann in einen Sinterofen überführt. Dort wurde er unter Luft ab 120 °C mit 3 °C/min bis auf 500 °C aufgeheizt, 1 h bei 500 °C belassen, dann mit 3 °C/min auf 1650 °C aufgeheizt, 2 h bei 1650 °C belassen und der Ofen dann mit 3 °C/min auf 1.000 °C abgekühlt und danach der Ofen abgeschaltet. Der gesinterte Schaumkörper war gegenüber dem ungesinterten Schaumkörper in seinen linearen Dimensionen um ca. 20% geschrumpft. Er war mechanisch recht stabil und bestand aus offenen Poren mit Porenweiten von 0,2 bis 0,5 mm.

### BEISPIEL 3

Entsprechend Beispiel 1 wurden in das Becherglas 4 g einer wäßrigen 25%igen Lösung von Tetrabutylammoniumoleat, 7 g Polyacrylesterdispersion, 2 g Ammoniumcarbonat eingewogen und mit destilliertem Wasser auf 22 ml aufgefüllt. Die Mischung wird homogenisiert und dabei das Ammoniumhydrogencarbonat aufgelöst. Unter Mischen mit dem Intensivmischer werden entsprechend Beispiel 1 innerhalb von 30 min 122 g Kobaltoxid Co₃O₄ mit einer Korngröße um 1 *µ*m, Dichte 6,07 g/cm³ zudosiert und dann noch 10 min gerührt. Nach Entfernen des Rührers lag eine zähe, fließfähige Mischung vor. Das Becherglas samt Inhalt wurde im Mikrowellenofen 20 s lang einem Mikrowellenfeld ausgesetzt. Dadurch wurde das Schlickermaterial von etwa 40 ml Ausgangsvolumen auf ca. 220 ml Ausgangsvolumen um das 4,5-fache aufgeschäumt. Der offenporige, noch feuchte Schaum wurde aus dem als Form dienenden Becherglas entfernt und 2 h lang bei 120 °C in einem Umlufttrockenschrank getrocknet. Danach wurde er in einen Pyrolyseofen überführt und ab 120 °C mit 3 °C/min in Luft auf 600 °C erhitzt und 2 h bei 600 °C belassen. Dann wurde der Ofen abgekühlt, der von den organischen Bestandteilen befreite Kobaltoxidschaum herausgenommen und in einen Metallsinterofen überführt. Dort wurde der Schaumkörper in einer Wasserstoffatmosphäre bei Normaldruck mit 3 °C/min bis auf 1150 °C aufgeheizt, 2 h bei 1150 °C belassen und der Ofen dann unter Wasserstoff abgekühlt. Danach wurde die Wasserstoffatmosphäre durch Stickstoff ersetzt und der Schaumkörper entnommen.

Weil Kobalt sich an Luft mit einer relativ dichten, dünnen passivierenden Oxidschicht überzieht, sind keine Schutzmaßnahmen gegen Abbrennen des Schaums erforderlich. Entsprechend hergestellte Eisenschäume müssen jedoch in Stickstoff oder Argon aufbewahrt werden, weil sie an der Luft abbrennen können.

Gegenüber dem ungesinterten Kobaltoxidschaum ist der metallische Kobaltschaum infolge Sinterschrumpf sowie durch die Volumenverkleinerung beim Übergang von Kobaltoxid auf metallisches Kobalt in seinen linearen Dimensionen um ca. 36% geschrumpft. Der Kobaltschaum ist mechanisch extrem stabil und besteht aus offenen Poren mit Porenweiten von 0,2 bis 0,8 mm.

### BEISPIEL 4

In ein Becherglas mit ca. 7 cm Durchmesser und ca. 9 cm Höhe wurden 5 g eines wäßrigen Gels aus 1 Teil Tetramethylammoniumoleat und 3 Teilen Wasser eingewogen. Sodann wurden 22 g einer 20%igen wäßrigen Lösung eines hochmolekularen Polyvinylpyrrolidons (Luviskol® K 90, BASF AG) sowie 2 g Ammoniumcarbonat zugegeben. Die Mischung wurde gerührt und dabei das Ammoniumcarbonat gelöst. Danach wurden in diese Mischung unter intensiverem Rühren in einem Zeitraum von 40 min - 80% in 5 min, weitere 10% in 5 min, die restlichen 10% in 15 min, weiteres Rühren von 20 min - 64 g eines Siliciumcarbid-Pulvers mit einer mittleren Korngröße um 0,7 *µ*m, Dichte 3,2 g/cm³ und einem Gehalt von 0,2% Borcarbid als Sinterhilfe zugegeben.

Nach dem Mischen wurde ein fließfähiges Schlickermaterial erhalten. In dieses Schlickermaterial wurden innerhalb von ca. 30 s 2 g eines Phthalsäureanhydrid-Pulvers gerührt, das durch Mahlen des handelsüblichen geschuppten Materials und Sichtung auf eine Korngröße von 20 - 50 *µ*m gebracht worden war. Nach ca. 2 min begann der Schäumvorgang unter Ausdehnung des Schlickermaterials im Becherglas. Nach ca. 3 min dehnte sich der Schaum nicht mehr aus, er war um das Vierfache seines Ausgangsvolumens expandiert. Nach Antrocknen wurde der offenporige Schaum entnommen, 2 h bei 130 °C in einem Umluftofen getrocknet und danach die organischen Bestandteile in einem Pyrolyseofen durch Aufheizen mit 2 °C/min bis auf 600 °C unter Luft und 1 h Halten auf 600 °C entfernt. Nach Abkühlen des Pyrolyseofens wurde der Schaumkörper in einen Graphitsinterofen überführt, in Argon mit 5 °C/min aufgeheizt und 2 h bei 2150 °C gesintert.

Es wurde ein stabiler Schaumkörper aus Siliciumcarbid erhalten, der gegenüber dem ungesinterten Schaumkörper in seinen linearen Dimensionen um ca. 21% geschrumpft war und aus offenen Poren mit Porenweiten von 0,5 bis 1 mm bestand.

### BEISPEL 5

In ein Becherglas mit ca. 7 cm Durchmesser und ca. 9 cm Höhe wurden 1 g eines wäßrigen Gels von 25%igem Tetramethylammoniumoleat, 19 g einer 20%igen wäßrigen Lösung eines hochmolekularen Polyvinylpyrrolidons (Luviskol® K 90, BASF AG) sowie 2 g Ammoniumhydrogencarbonat dosiert. Die Mischung wurde gerührt und dabei das Ammoniumhydrogencarbonat gelöst. Danach wurden in diese unter intensivem Rühren in einem Zeitraum von 15 min 168,7 g eines Eisenpulvers mit einer Dichte von 7,67 g/cm³, Korngröße um 3 *µ*m (Carbonyleisenpulver CEP, BASF AG) eingerührt. Nach weiteren 10 min Rühren wurde eine fließfähige, zähe Mischung erhalten. In diese Mischung wurden innerhalb von ca. 30 s 2 g eines Phthalsäureanhydrid-Pulvers mit einer Korngröße im Bereich von 20 - 50 *µ*m eingerührt. Nach ca. 1,5 min begann das Aufschäumen. Der Schäumvorgang war nach 2 min beendet, das anfängliche Volumen hatte sich um das sechsfache ausgedehnt.

Der erhaltene offenporige Schaumkörper wurde unter Stickstoff 2 h bei 130 °C getrocknet (unter Luft erfolgt Entzündung!). Der getrocknete Schaumkörper wurde in einem mit Stickstoff gefluteten Sinterofen überführt. Im Sinterofen wurde während des Aufheizens mit 2 °C/min bis auf 600 °C der Stickstoff durch Wasserstoff ersetzt. Nach einer Haltezeit von 2 h bei 600 °C wurde mit 4 °C/min auf 1200 °C weiter aufgeheizt, die Temperatur 1 h bei 1200 °C belassen und der Ofen dann abgekühlt. Nach dem Abkühlen wurde der Wasserstoff gegen Stickstoff ausgetauscht und der Schaumkörper sodann in ein mit Argon gefülltes Gefäß überführt, um ein Entzünden zu vermeiden. Es wurde ein mechanisch sehr stabiler offenporiger Eisenschaum erhalten, der gegenüber dem ungesinterten Schaumkörper in seinen linearen Dimensionen um ca. 16% geschrumpft war, mit Porenweiten von 0,1 bis 0,8 mm.

## Patentansprüche

1. Kontinuierliches Verfahren zur Herstellung von offenzelligen, anorganischen Sinterschaum-Produkten, **dadurch gekennzeichnet, daß**
a. Schlickermaterial durch Vermischen von sinterfähigem anorganischen Pulver mit Wasser, einem Dispergiermittel und einem organischen Bindemittel hergestellt und kontinuierlich zwangsgefördert wird,
b. das zwangsgeförderte Ausgangsgemisch kontinuierlich einer Druckerzeugungsstufe derart unterzogen wird, daß das Wasser zumindest teilweise, aber im wesentlichen ohne Volumenveränderung und unter Druckerhöhung durch Aufheizen auf eine Temperatur von 100 bis 200°C im Ausgangsgemisch verdampft und dadurch ein unter Druck stehendes Ausgangsgemisch gebildet wird,
c. das unter Druck stehende Ausgangsgemisch kontinuierlich in ein unter niedrigerem Druck als dem des unter Druck stehenden Ausgangsgemischs stehenden Volumens unter Bildung eines Ausgangsgemisch-Schaums expandiert wird, wobei die Fließfähigkeit des Ausgangsgemisch-Schaums unter Ausbildung eines offenporigen Zwischenkörpers im wesentlichen beseitigt wird,
d. der Ausgangsgemisch-Schaum zu einem Grünschaumkörper umgewandelt wird, wobei verbleibendes Wasser,sowie ggf. weiteres Material aus dem Ausgangsgemisch-Schaum entfernt wird, und
e. der Grünschaumkörper zu dem offenzelligen anorganischen Sinterschaum-Produkt gesintert wird.

2. Verfahren nach Anspruch 1, **dadurch gekennzeichnet, daß** das Schlikkermaterial zusätzlich ein Treibgas bildendes Material enthält.

3. Verfahren nach Anspruch 1, **gekennzeichnet durch** eines oder mehrere der folgenden Merkmale:
a. Die Zwangsförderung erfolgt in einem kontinuierlich arbeitenden Schneckenextruder, vorzugsweise einem Zweiwellenschneckenextruder;
b. Der Zwangsförderstufe werden voneinander getrennt anorganisches Pulver und die übrigen Materialien so zugeführt, daß deren Vermischung zu einem Schlickermaterial erst in der Zwangsförderstufe erfolgt;
c. Es wird ohne zusätzliches Treibmittel gearbeitet, und das zwangsgeförderte Gemisch wird znm Verdampfen zumindest eines Teils des Wassers auf eine Temperatur im Bereich von 100 bis 200 °C in mehr als einer Stufe ansteigend aufgeheizt, wobei der sich bildende Ausgangsgemisch-Schaum **durch** den **durch** die Verdampfung erfolgenden Wasserentzug zellstabilisiert wird;
d. In den Zwangsförderer werden voneinander getrennt anorganisches Pulver und eine Mischung aus Wasser, Dispergiermittel und Bindemittel zugeführt;
e. Das Ausgangsgemisch in dem Zwangsförderer wird in einem Heizbereich des Zwangsförderers erwärmt;
f. Der Ausgangsgemisch-Schaum wird **durch** Trocknen in den Grünschaumkörper umgewandelt;
g. Der Grünschaumkörper wird auf die Sintertemperatur des anorganischen Pulvermaterials mit einer Erwärmungsgeschwindigkeit von 2 bis 20°C/min gebracht;
h. Zur Beendigung des Verfahrens wird zunächst die Heizung des zwangsgeförderten Materials derart zurückgefahren, daß im wesentlichen keine Verdampfung des verdampfbaren Materials in dem Zwangsförderer mehr erfolgt, und danach wird der Zwangsförderer entleert.

4. Verfahren nach Anspruch 1, **dadurch gekennzeichnet, daß** die Beseitigung der Fließfähigkeit des Schlickermaterials im Verfahrensabschnitt c. durch Entfernen von Wasser und eine Erhöhung des Volumenfüllgrades des Schlickermaterials erfolgt.

5. Verfahren nach einem der vorhergehenden Ansprüche, **dadurch gekennzeichnet, daß** ein Schlickermaterial verwendet wird, das als anorganisches Pulver eines oder mehrere der folgenden Pulvermaterialien enthält:
Metallpulver
mineralische Pulver
Keramikpulver
Metallcarbidpulver
Metallnitridpulver

6. Verfahren nach einem der vorhergehenden Ansprüche, **dadurch gekennzeichnet, daß** ein Schlickermaterial verwendet wird, das im wesentlichen aus folgenden Materialien besteht:
| | | |
|---|---|---|
| a. | anorganisches Pulver inklusive Sinterhilfsmittel | 30 - 60 Vol.-Teile |
| b. | Wasser | 30 - 60 Vol.-Teile |
| c. | Dispergiermittel | 0,5 - 3 Vol.-Teile |
| d. | Bindemittel | 2 - 12 Vol.-Teile |
| e. | Treibmittel | 0 - 4 Vol.-Teile |
| f. | Treibmittelprecursor | 0 - 8 Vol.-Teile. |

7. Verfahren nach einem der vorhergehenden Ansprüche, **dadurch gekennzeichnet, daß** katalytisch aktives Material oder in ein solches umwandelbares Material auf die innere und/oder äußere Oberfläche der offenen Zellen aufgebracht wird.

## Claims

1. A continuous process for producing open-celled, inorganic sintered foam products, which comprises
a. preparing a slip by mixing sinterable inorganic powder with water, a dispersant and an inorganic binder and forcibly conveying it continuously,
b. subjecting the forcibly conveyed starting mixture continuously to a pressurization step so that the water is vaporized at least partly but essentially without a change in volume and with an increase in pressure by heating to from 100 to 200°C in the starting mixture and thereby forming a pressurized starting mixture,
c. continuously expanding the pressurized starting mixture into a volume which is at a pressure lower than that of the pressurized starting mixture to form a starting mixture foam being made essentially nonflowable to form an open-pored intermediate body,
d. converting the starting mixture foam into a green foam body, with remaining water and, if appropriate, further material being removed from the starting mixture foam, and
e. sintering the green foam body to form the open-celled inorganic sintered foam product.

2. A process as claimed in claim 1, wherein the slip further comprises a material which forms a blowing gas.

3. A process as claimed in claim 1 in which one or more of the following features are present:
a. the forcible conveying is carried out in a continuously operated screw extruder, preferably a twin-screw extruder;
b. inorganic powder and the other materials are fed separately to the forcible conveying step so that they are mixed to form a slip only in the forcible conveying step;
c. the process is carried out without additional blowing agent, and the forcibly conveyed mixture is heated monotonically in more than one step to a temperature in the range from 100 to 200°C to vaporize at least part of the water, with the cells of the starting mixture foam formed being stabilized by the removal of water occurring as a result of the vaporization;
d. feeding inorganic powder and a mixture of water, dispersant and binder separately into the forcible conveying apparatus;
e. heating the starting mixture in the forcible conveying apparatus in a heating region of the forcible conveying apparatus;
f. the starting mixture foam is converted into the green foam body by drying;
g. the green foam body is brought to the sintering temperature of the inorganic powder material at a heating rate of from 2 to 20°C/min;
h. to end the process, the heating of the forcibly conveyed material is firstly reduced so that essentially no more vaporization of the vaporizable material occurs in the forcible conveying apparatus, and the forcible conveying apparatus is then emptied.

4. A process as claimed in claim 1, wherein the slip is made nonflowable in process step c. by removal of water and an increase in the proportion by volume of solids in the slip.

5. A process as claimed in any of the preceding claims, wherein the slip used comprises, as inorganic powder, one or more of the following powder materials:
metal powders
mineral powders
ceramic powders
metal carbide powders
metal nitride powders.

6. A process as claimed in any of the preceding claims, wherein the slip material used consists essentially of the following materials:
| | | |
|---|---|---|
| a. | inorganic powder including sintering aids | 30-60 parts by volume |
| b. | water | 30-60 parts by volume |
| c. | dispersant | 0.5-3 parts by volume |
| d. | binder | 2-12 parts by volume |
| e. | blowing agent | 0-4 parts by volume |
| f. | blowing agent precursor | 0-8 parts by volume. |

7. A process as claimed in any of the preceding claims, wherein catalytically active material or material which can be converted into catalytically active material is applied to the inner and/or outer surface of the open cells.

## Revendications

1. Procédé continu de préparation de produits mousses frittés inorganiques à porosité ouverte, **caractérisé en ce que**
a. on prépare un matériau de barbotine par mélange d'une poudre inorganique friffable avec de l'eau, un agent de dispersion et un liant organique, et on le guide en continu par alimentation forcée,
b. le mélange de départ injecté est soumis à une étape de génération de pression, de manière que l'eau s'évapore tout au moins en partie, mais essentiellement sans variation de volume et par pressurisation par chauffage à une température de 100 à 200°C dans le mélange de départ et qu'il se forme ainsi un mélange de départ se trouvant sous pression,
c. le mélange de départ se trouvant sous pression est expansé en continu dans un volume se trouvant à une pression inférieure à celle du mélange de départ sous pression, avec formation d'une mousse du mélange de départ, la fluidité de la mousse du mélange de départ étant supprimée par formation d'un corps intermédiaire à porosité ouverte,
d. la mousse de mélange de départ est transformée en un corps expansé vert, l'eau restante ainsi qu'éventuellement d'autres matières du mélange de départ étant éliminées, et
e. le corps expansé vert est fritté pour donner le produit expansé fritté.

2. Procédé selon la revendication 1, **caractérisé en ce que** le matériau de barbotine contient en outre une matière formant un gaz gonflant.

3. Procédé selon la revendication 1, **caractérisé par** une ou plusieurs des caractéristiques suivantes:
a. L'alimentation forcée est envoyée dans une extrudeuse à vis sans fin travaillant en continu, de préférence une extrudeuse à deux arbres;
b. Dans l'étape d'alimentation forcée sont amenés séparément la poudre inorganique et les autres matériaux, de manière que leur mélange pour former la barbotine se fasse d'abord dans l'étape d'alimentation forcée;
c. On travaille sans gaz gonflant additionnel, et le mélange alimenté est chauffé, pour évaporer tout au moins une partie de l'eau, à une température de l'ordre de 100 à 200°C, progressivement et en plus d'une étape, et la mousse du mélange de départ qui se forme par suite de la déperdition d'eau consécutive à l'évaporation est stabilisée au niveau des alvéoles;
d. Dans le dispositif d'alimentation forcée sont amenés séparément la poudre inorganique et un mélange d'eau, d'agent dispersant et de liant;
e. Le mélange de départ est chauffé, dans le système d'alimentation forcée, dans une zone de chauffe du transporteur:
f. La mousse du mélange de départ est convertie par séchage en un corps expansé vert;
g. Le corps expansé vert est porté à la température de frittage du matériau pulvérulent inorganique avec un gradient de chauffage de 2 à 20°C/min.;
h. Pour clôturer le procédé, le chauffage de la matière injectée est d'abord rétrogradé de manière qu'il ne se produise pratiquement plus d'évaporation des substances vaporisables dans le transporteur, après quoi le transporteur est déchargé.

4. Procédé selon la revendication 1, **caractérisé en ce que** la suppression de la fluidité du matériau de barbotine dans l'étape de processus c. est opérée par élimination d'eau et augmentation du taux de remplissage volumique du matériau de barbotine.

5. Procédé selon l'une des revendications qui précèdent, **caractérisé en ce que** l'on utilise un matériau de barbotine contenant comme poudre inorganique un ou plusieurs des matériaux pulvérulents suivants:
poudre métallique
poudre minérale
poudre céramique
poudre de carbure métallique
poudre de nitrure métallique.

6. Procédé selon l'une des revendications qui précèdent, **caractérisé en ce que** l'on utilise un matériau de barbotine constitué des matériaux suivants:
| | | |
|---|---|---|
| a. | Poudre inorganique avec adjuvant de frittage | 30 à 60 parties en volume |
| b. | Eau | 30 à 60 parties en volume |
| c. | Agent de dispersion | 0,5 à 3 parties en volume |
| d. | Liant | 2 à 12 parties en volume |
| e. | Agent porogène | 0 à 4 parties en volume |
| f. | Précurseur d'agent porogène | 0 à 8 parties en volume |

7. Procédé selon l'une des revendications qui précèdent, **caractérisé en ce qu'**un matériau à activité catalytique ou convertible en un tel matériau est appliqué sur la surface intérieure et/ou extérieure des alvéoles ouvertes.
